# FASCICULE DE BREVET EUROPEEN

(11) **EP 4 086 089 B1**
(45) Date de publication et mention de la délivrance du brevet: **03.06.2026**
(21) Numéro de dépôt: 22170231.9
(22) Date de dépôt: 27.04.2022
(51) Int. Cl.: B60D 1/56, B60D 1/48

(54) **ENSEMBLE FORMÉ PAR UN ÉLÉMENT DE CAISSE D'UN VÉHICULE AUTOMOBILE, UN DISPOSITIF DE REMORQUAGE DU VÉHICULE AUTOMOBILE ET AU MOINS DEUX MOYENS DE FIXATION**
EINHEIT, DIE AUS EINEM KAROSSERIETEIL EINES KRAFTFAHRZEUGS, EINER ABSCHLEPPVORRICHTUNG DES KRAFTFAHRZEUGS UND MINDESTENS ZWEI BEFESTIGUNGSMITTELN GEBILDET WIRD
ASSEMBLY MADE UP OF A BODYWORK ELEMENT FOR A MOTOR VEHICLE, A TOWING DEVICE FOR A MOTOR VEHICLE AND AT LEAST TWO ATTACHMENT MEANS.

(30) Priorité: 05.05.2021 FR 2104748
(43) Date de publication de la demande: 09.11.2022
(73) Titulaire: Renault s.a.s, 92100 Boulogne Billancourt (FR)
(72) Inventeur: SEIGNEUR, Quentin, 78084 Guyancourt CEDEX (FR)

(56) Documents cités:
- DE-U1- 202009 006 554
- FR-A1- 2 842 152
- GB-A- 1 331 965
- JP-A- 2012 192 833
- US-A1- 2004 090 041
- US-A1- 2010 003 103
- US-A1- 2011 285 107
- US-A1- 2020 070 603
- US-A1- 2020 317 009

## Description

L'invention concerne un ensemble formé par un élément de caisse d'un véhicule automobile, un dispositif de remorquage du véhicule automobile et au moins deux moyens de fixation.

Les véhicules automobiles comprennent de nombreux éléments de caisse, notamment en tôle ou en matériau thermoplastique, susceptibles d'entrer en vibration lors de l'utilisation du véhicule. Ces éléments de caisse peuvent se situer par exemple au niveau des portières ou du hayon du véhicule.

Selon leur fréquence et leur amplitude, les vibrations des éléments de caisse peuvent entrainer des nuisances sonores pour les usagers du véhicule, se manifestant, par exemple, par un bourdonnement dans l'habitacle du véhicule.

Il est possible de renforcer les éléments de caisse par une ou plusieurs pièces de structure telles que des tirants, dont la rigidité permettra d'atténuer les vibrations. Toutefois, l'ajout de telles pièces augmente la masse du véhicule, et de ce fait est contraire à l'objectif de réduction de masse des véhicules visant à réduire leur consommation de carburant. De plus, cela requiert une opération supplémentaire lors de l'assemblage du véhicule.

Le but de l'invention est de fournir un dispositif remédiant aux inconvénients ci-dessus et améliorant les dispositifs connus de l'art antérieur. En particulier, l'invention permet de réaliser un dispositif qui soit simple et fiable et qui permette de limiter les vibrations d'un élément de caisse de véhicule sans augmenter la masse du véhicule.

A cet effet, l'invention porte sur un ensemble comprenant un élément de caisse d'un véhicule automobile, un dispositif de remorquage du véhicule automobile, et au moins deux moyens de fixation, le dispositif de remorquage étant fixé à l'élément de caisse par l'intermédiaire des au moins deux moyens de fixation de sorte à atténuer des vibrations de l'élément de caisse.

Dans un mode de réalisation, la surface de l'élément de caisse présente, au voisinage des moyens de fixation, une contre-forme du dispositif de remorquage.

Dans un mode de réalisation, le dispositif de remorquage comprend un anneau et une tige.

Dans un mode de réalisation, un premier moyen de fixation est agencé au travers d'une ouverture centrale de l'anneau du dispositif de remorquage et/ou un deuxième moyen de fixation coopère avec la tige du dispositif de remorquage.

Dans un mode de réalisation, la tige du dispositif de remorquage comprend un trou traversant, et un deuxième moyen de fixation est agencé au travers du trou.

Dans un mode de réalisation, au moins un moyen de fixation comprend une tête conique en appui sur le dispositif de remorquage et une partie filetée coopérant avec un taraudage disposé dans l'élément de caisse.

Dans un mode de réalisation, au moins un moyen de fixation est un logement réalisé dans l'élément de caisse.

Dans un mode de réalisation, l'ensemble comprend une garniture recouvrant l'élément de caisse, et la garniture comprend une trappe permettant d'accéder au dispositif de remorquage.

Dans un mode de réalisation, l'élément de caisse est en matériau thermoplastique.

L'invention porte aussi sur un hayon de véhicule automobile comprenant un ensemble selon l'invention.

L'invention porte en outre sur un véhicule automobile comprenant un hayon selon l'invention et/ou un ensemble selon l'invention.

Le dessin annexé représente, à titre d'exemple, un mode de réalisation d'un ensemble formé par un élément de caisse d'un véhicule automobile, un dispositif de remorquage du véhicule automobile et au moins deux moyens de fixation selon l'invention.
[Fig. 1] La figure 1 représente schématiquement un véhicule équipé d'un ensemble selon l'invention.
[Fig. 2] La figure 2 représente un mode de réalisation d'un élément de caisse faisant partie d'un ensemble selon l'invention.
[Fig. 3] La figure 3 représente un mode de réalisation d'un moyen de fixation faisant partie d'un ensemble selon l'invention.
[Fig. 4] La figure 4 représente un premier mode de réalisation d'un ensemble selon l'invention.
[Fig. 5]. La figure 5 représente un deuxième mode de réalisation d'un ensemble selon l'invention.
[Fig. 6]. La figure 6 représente un mode de réalisation d'une garniture faisant partie d'un ensemble selon l'invention.

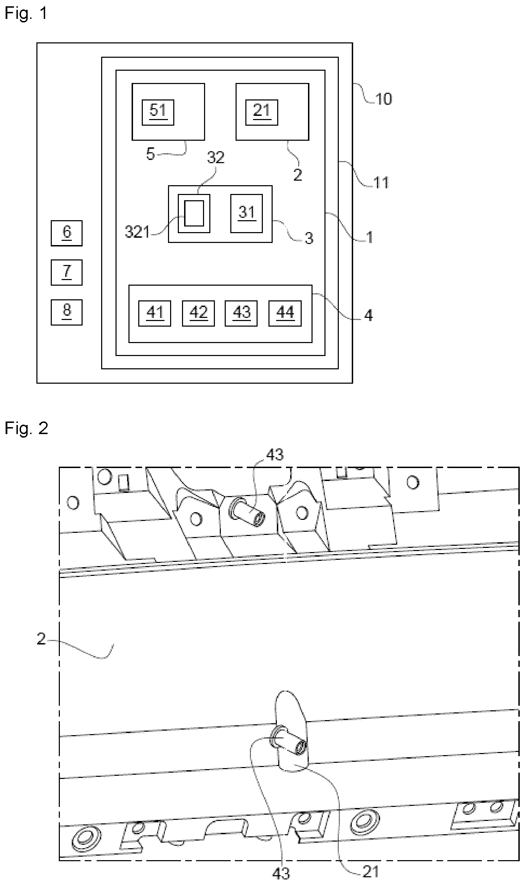

Un exemple d'un véhicule automobile 10 équipé d'un mode de réalisation d'un ensemble formé par un élément de caisse, un dispositif de remorquage et au moins deux moyens de fixation est décrit ci-après en référence à la figure 1.

Le véhicule automobile 10 est un véhicule de tout type, notamment un véhicule de tourisme ou un véhicule utilitaire. Le véhicule automobile 10 pourrait également être un camion ou un autobus.

Dans le mode de réalisation présenté, le véhicule automobile 10 comprend un ensemble 1 comprenant un élément de caisse 2, un dispositif de remorquage 3 et au moins deux moyens de fixation 4.

L'élément de caisse 2 peut par exemple être un panneau en tôle ou en matériau thermoplastique. Notamment, l'élément de caisse 2 peut être un panneau se situant au niveau des ouvrants, par exemple au niveau d'une des portières ou encore du hayon. Dans la suite du document, l'élément de caisse 2 est nommé « panneau » 2.

L'ensemble 1 peut également comprendre un panneau de garniture 5 équipant le panneau 2.

L'ensemble 1 comprend un dispositif de remorquage 3. Un dispositif de remorquage 3 est un dispositif permettant de relier le véhicule 10 à un véhicule de dépannage. Il présente une résistance apte à supporter la traction du véhicule 10 par le véhicule de dépannage.

Le dispositif de remorquage 3 comprend préférentiellement
- un anneau 31, présentant préférentiellement une ouverture centrale, et
- une tige 32 destinée, lors d'un remorquage du véhicule automobile 10, à être fixée, notamment par vissage, à une structure de fixation du véhicule 10, notamment à une structure de fixation d'un bas de caisse 8 du véhicule automobile 10. Le dispositif de remorquage est de préférence en métal, par exemple en acier. L'anneau et la tige peuvent être deux éléments soudés ensemble. En variante, le dispositif de remorquage pourrait se présenter sous la forme d'un élément monobloc. La tige peut être tubulaire et/ou s'étendre parallèlement à un axe.

L'ensemble 1 comprend en outre au moins deux moyens de fixation 4. Un premier moyen de fixation 4 est agencé au travers de l'ouverture centrale de l'anneau 31 du dispositif de remorquage 3. Un deuxième moyen de fixation 4 est agencé au niveau de la tige 32 du dispositif de remorquage 3, notamment au travers de la tige, sensiblement à mi-hauteur de la tige.

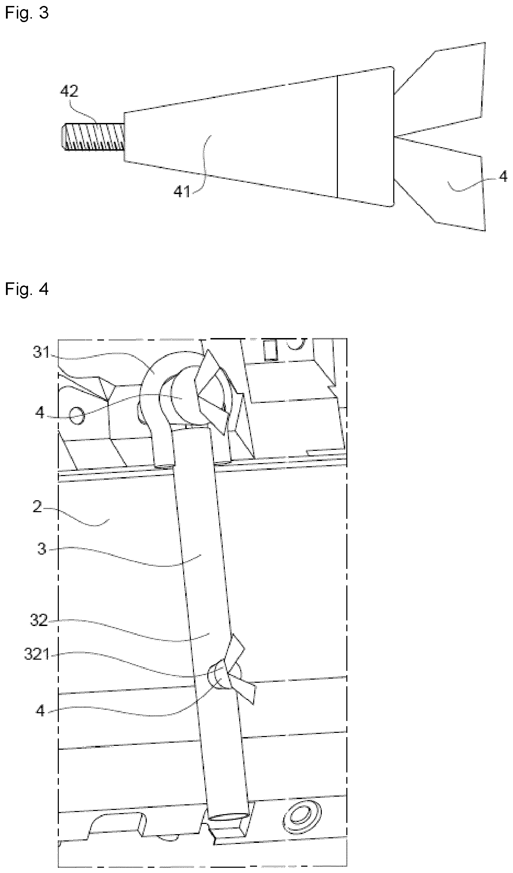

Un premier mode de réalisation du moyen de fixation 4 est illustré par la figure 3. Dans ce mode de réalisation, le moyen de fixation 4 comprend d'une part une tête conique 41 montée sur une partie filetée 42, et d'autre part un taraudage 43 disposé dans le panneau 2. L'assemblage constitué d'une tête conique 41 montée sur une partie filetée 42 est nommé par la suite « vis à tête conique ».

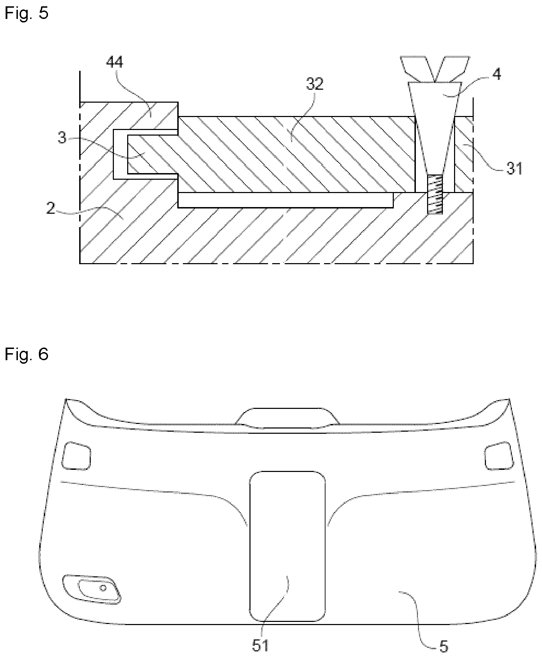

Un deuxième mode de réalisation du moyen de fixation 4 est illustré par la figure 5. Dans ce mode de réalisation, le moyen de fixation 4 est un logement 44 réalisé dans le panneau 2. Avantageusement le logement 44 comprend au moins un épaulement fournissant une surface d'appui pour la fixation du dispositif de remorquage 3 sur le panneau 2. De préférence le logement 44 est dimensionné de sorte à maintenir sans jeu ou avec un jeu minimal le dispositif de remorquage. Par exemple l'extrémité de la tige pourrait être emmanchée en interférence dans le logement 44.

Un premier mode de réalisation de l'ensemble 1 est plus spécifiquement illustré par la figure 4 et un deuxième mode de réalisation de l'ensemble 1 est plus spécifiquement illustré par la figure 5.

Dans la suite du document, le premier et le deuxième mode de réalisation de l'ensemble 1 sont décrits en considérant que le panneau 2 est un caisson de porte de coffre. Ainsi, à proximité du panneau 2, le véhicule automobile 10 comprend notamment :
- un moteur pour essuie-glaces 6 disposé dans une zone supérieure du panneau 2,
- une serrure pour coffre 7 disposée dans une zone inférieure du panneau 2, et
- un bas de caisse 8.

Le poids du moteur pour essuie-glaces 6 est susceptible de générer des oscillations du moteur 6, créant ainsi des vibrations dans la zone supérieure du panneau 2 se situant à proximité du moteur 6.

Par ailleurs, la zone inférieure du panneau 2 se situant à proximité de la serrure 7 est rigidifiée par le fait que la serrure 7 est reliée au bas de caisse 8 du véhicule. De ce fait, la zone inférieure du panneau 2 située à proximité de la serrure 7 vibre très peu.

Avantageusement, le dispositif de remorquage 3 est disposé de sorte à relier la zone supérieure du panneau 2 à la zone inférieure du panneau 2.

Ainsi, préférentiellement, un premier moyen de fixation 4 de l'ensemble 1 est disposé au niveau de la zone supérieure du panneau 2, et un deuxième moyen de fixation 4 de l'ensemble 1 est disposé au niveau de la zone inférieure du panneau 2.

Avantageusement, la surface du panneau 2 présente, au voisinage des moyens de fixation 4, une contre-forme 21 du dispositif de remorquage 3. La contre-forme 21 facilite le montage de l'ensemble 1, notamment pour un usager du véhicule automobile 10. Par ailleurs, la contre-forme 21 permet d'augmenter la surface de contact entre le panneau 2 et le dispositif de remorquage 3, ce qui peut d'une part consolider l'assemblage de ces deux pièces et d'autre part favoriser l'atténuation des vibrations.

Dans le premier mode de réalisation de l'ensemble 1, le premier et le deuxième moyen de fixation 4 sont réalisés selon le premier mode de réalisation du moyen de fixation 4.

Autrement dit, dans le premier mode de réalisation de l'ensemble 1, le dispositif de remorquage est fixé au panneau 2 par une première et une deuxième vis à tête conique collaborant respectivement avec un premier et un deuxième taraudage 43, les deux taraudages 43 étant disposés dans le panneau 2.

Comme cela est illustré par la figure 4, la première vis à tête conique traverse l'ouverture de l'anneau 31 du dispositif de remorquage. La partie filetée 42 de la première vis à tête conique est vissée dans le premier taraudage du panneau 2 jusqu'à ce que la tête conique 41 soit en butée contre l'anneau 31.

Dans le premier mode de réalisation de l'ensemble 1, la tige 32 du dispositif de remorquage présente un trou 321. Avantageusement, lorsque la première vis à tête conique est vissée dans le premier taraudage, le trou 321 se situe en face du deuxième taraudage du panneau 2. La partie filetée 42 de la deuxième vis à tête conique peut alors traverser la tige 32 du dispositif de remorquage, via le trou 321, pour se visser dans le deuxième taraudage. La deuxième vis à tête conique est ainsi vissé dans le deuxième taraudage jusqu'à ce que sa tête conique 41 soit en butée contre la tige 32.

Dans un deuxième mode de réalisation de l'ensemble 1, le premier moyen de fixation 4 est réalisé selon le premier mode de réalisation du moyen de fixation 4, et le deuxième moyen de fixation 4 est réalisé selon le deuxième mode de réalisation du moyen de fixation 4. Autrement dit, dans le deuxième mode de réalisation de l'ensemble 1, l'anneau 31 du dispositif de remorquage est fixé par une vis à tête conique collaborant avec le premier taraudage 43 du panneau 2, et la tige 32 du dispositif de remorquage est fixée par un logement 44 réalisé dans le panneau 2.

Dans ce mode de réalisation, l'extrémité libre de la tige 32 a été usinée de sorte à créer un épaulement destiné à venir en contact avec l'épaulement du logement 44.

Avantageusement, le logement 44 est réalisé dans la partie inférieure du panneau 2, à proximité de la serrure 7.

Dans ce deuxième mode de réalisation de l'ensemble 1, l'extrémité libre de la tige 32 est insérée dans le logement 44 de sorte à placer l'épaulement de la tige 32 contre l'épaulement du logement 44. Puis une vis à tête conique est disposée dans l'ouverture de l'anneau 31 du dispositif de remorquage. La partie filetée 42 de la vis à tête conique est vissée dans le premier taraudage du panneau 2 jusqu'à ce que la tête conique 41 soit en butée contre l'anneau 31, comme cela a été précédemment décrit dans le premier mode de réalisation de l'ensemble 1.

Le panneau 2 de l'ensemble 1 peut être équipé d'une garniture 5. Dans ce cas, illustré par la figure 6, la garniture 5 présente avantageusement une trappe 51 placée en vis-à-vis du dispositif de remorquage 3, pour le rendre accessible à un usager.

D'autres modes de réalisation de l'ensemble 1 sont envisageables. Les modes de réalisation de l'ensemble 1 prennent préférentiellement en compte un ensemble de paramètres, parmi lesquels :
- la géométrie du panneau 2,
- la localisation de la zone de vibration du panneau 2,
- la localisation d'une zone rigide du panneau 2,
- la compatibilité entre la longueur du dispositif de remorquage et la distance séparant la zone de vibration de la zone rigide,
- l'accessibilité, pour un usager, de la zone de fixation du dispositif de remorquage 3.

L'ensemble 1 selon l'invention présente plusieurs avantages.

Sans l'invention, la zone de vibration et la zone rigide du panneau 2 sont reliées entre elles par une toile plastique qui ne permet pas d'atténuer suffisamment les vibrations du panneau 2. Cette situation est susceptible de générer un inconfort pour les usagers du véhicule automobile 10. Avec la mise en œuvre de l'invention, le panneau est rigidifié et les vibrations sont atténuées de sorte à se situer en dessous d'un seuil limite de vibration. A titre d'exemple, le seuil limite de vibration peut être compris entre 20 et 60 Hz, préférentiellement entre 37Hz et 50Hz, notamment si l'élément de caisse est destiné à un véhicule de type à propulsion électrique. Pour un véhicule ayant un moteur à combustion, ce seuil limite pourrait être supérieur aux valeurs susmentionnées.

L'utilisation d'un dispositif de remorquage 3 pour relier la zone de vibration à la zone rigide du panneau 2 permet non seulement d'atténuer les vibrations, mais aussi d'obtenir un gain de masse. En effet, sans mise en œuvre de l'invention, une solution de réduction des vibrations pourrait consister à ajouter des tirants entre la zone de vibration et une zone rigide du panneau 2. L'ajout de tirants, ou de toute autre pièce, créerait alors une augmentation de la masse du véhicule automobile 10. Avec la mise en œuvre de l'invention, le dispositif de remorquage 3 joue le rôle d'un ou plusieurs tirants.

Lorsque le dispositif de remorquage doit être utilisé aux fins d'un dépannage du véhicule, il est facilement accessible dans le hayon. **Il** n'est pas utile de vider, même partiellement, le coffre pour y avoir accès. Lorsque le véhicule est remorqué au moyen du dispositif de remorquage celui-ci n'agit plus comme anti-vibrateur mais cela n'est pas gênant car le véhicule est alors libre de tout passager et/ou car cette situation est suffisamment exceptionnelle.

Outre le gain de masse, l'utilisation de dispositif de remorquage 3 pour relier la zone de vibration à une zone rigide du panneau 2 permet également de libérer un espace initialement destiné au rangement du dispositif de remorquage 3. L'espace ainsi libéré pourra être dédié à un autre usage.

## Revendications

1. Ensemble (1) comprenant un panneau (2) d'un véhicule automobile (10), un dispositif de remorquage (3) du véhicule automobile (10), et au moins deux moyens de fixation (4), le dispositif de remorquage étant fixé au panneau (2) par l'intermédiaire des au moins deux moyens de fixation (4) de sorte à atténuer des vibrations du panneau (2), le dispositif de remorquage (3) comprenant un anneau (31) et une tige (32), **caractérisé en ce qu'**un premier moyen de fixation (4) est agencé au travers d'une ouverture centrale de l'anneau (31) du dispositif de remorquage (3), et **en ce qu'**un deuxième moyen de fixation (4) coopère avec la tige (32) du dispositif de remorquage (3).

2. Ensemble (1) selon la revendication précédente, **caractérisé en ce que** la surface du panneau (2) présente, au voisinage des moyens de fixation (4), une contre-forme (21) du dispositif de remorquage (3).

3. Ensemble (1) selon la revendication1 ou 2, **caractérisé en ce que** la tige (32) du dispositif de remorquage (3) comprend un trou (321) traversant, et **en ce qu'**un deuxième moyen de fixation (4) est agencé au travers du trou (321).

4. Ensemble (1) selon l'une des revendications précédentes, **caractérisé en ce qu'**au moins un moyen de fixation (4) comprend une tête conique (41) en appui sur le dispositif de remorquage et une partie filetée (42) coopérant avec un taraudage (43) disposé dans le panneau (2).

5. Ensemble (1) selon l'une des revendications précédentes, **caractérisé en ce qu'**au moins un moyen de fixation (4) est un logement (44) réalisé dans le panneau (2).

6. Ensemble (1) selon l'une des revendications précédentes, **caractérisé en ce qu'**il comprend une garniture (5) recouvrant le panneau (2), et **en ce que** la garniture (5) comprend une trappe (51) permettant d'accéder au dispositif de remorquage (3).

7. Ensemble (1) selon l'une des revendications précédentes, **caractérisé en ce que** le panneau (2) est en matériau thermoplastique ou en tôle.

8. Hayon de véhicule automobile (11) comprenant un ensemble (1) selon l'une des revendications précédentes.

9. Véhicule automobile (10) comprenant un hayon (11) selon la revendication 8 et/ou un ensemble (1) selon l'une des revendications 1 à 7.

## Patentansprüche

1. Baugruppe (1), bestehend aus einem Karosserieteil (2) eines Kraftfahrzeugs (10), einer Abschleppvorrichtung (3) für das Kraftfahrzeug (10) und mindestens zwei Befestigungsmitteln (4), wobei die Abschleppvorrichtung über die mindestens zwei Befestigungsmittel (4) am Karosserieteil (2) befestigt ist, um Schwingungen des Karosserieteils (2) zu dämpfen, wobei die Abschleppvorrichtung (3) einen Ring (31) und eine Stange (32) aufweist, **dadurch gekennzeichnet, dass** ein erstes Befestigungsmittel (4) durch eine zentrale Öffnung des Rings (31) der Abschleppvorrichtung (3) hindurch angeordnet ist und dass ein zweites Befestigungsmittel (4) mit der Stange (32) der Abschleppvorrichtung (3) zusammenwirkt.

2. Baugruppe (1) nach dem vorhergehenden Anspruch, **dadurch gekennzeichnet, dass** die Oberfläche des Karosserieteils (2) in der Nähe der Befestigungsmittel (4) eine Gegenform (21) der Abschleppvorrichtung (3) aufweist.

3. Baugruppe (1) nach Anspruch 1 oder 2, **dadurch gekennzeichnet, dass** die Stange (32) der Abschleppvorrichtung (3) eine Durchgangsbohrung (321) aufweist und dass ein zweites Befestigungsmittel (4) durch die Durchgangsbohrung (321) hindurch angeordnet ist.

4. Baugruppe (1) nach einem der vorhergehenden Ansprüche, **dadurch gekennzeichnet, dass** mindestens ein Befestigungsmittel (4) einen konischen Kopf (41), der an der Abschleppvorrichtung anliegt, und einen Gewindeabschnitt (42) aufweist, der mit einem im Karosserieteil (2) angeordneten Innengewinde (43) zusammenwirkt.

5. Baugruppe (1) nach einem der vorhergehenden Ansprüche, **dadurch gekennzeichnet, dass** mindestens ein Befestigungsmittel (4) eine im Karosserieteil (2) ausgebildete Aufnahme (44) ist.

6. Baugruppe (1) nach einem der vorhergehenden Ansprüche, **dadurch gekennzeichnet, dass** sie eine das Karosserieteil (2) abdeckende Verkleidung (5) aufweist und dass die Verkleidung (5) eine Klappe (51) aufweist, die den Zugang zur Abschleppvorrichtung (3) ermöglicht.

7. Baugruppe (1) nach einem der vorhergehenden Ansprüche, **dadurch gekennzeichnet, dass** das Karosserieteil (2) aus thermoplastischem Material oder aus Blech besteht.

8. Heckklappe für ein Kraftfahrzeug (11) mit einer Baugruppe (1) nach einem der vorhergehenden Ansprüche.

9. Kraftfahrzeug (10) mit einer Heckklappe (11) nach Anspruch 8 und/oder einer Baugruppe (1) nach einem der Ansprüche 1 bis 7.

## Claims

1. Assembly (1) comprising a panel (2) of a motor vehicle (10), a towing device (3) of the motor vehicle (10), and at least two fastening means (4), the towing device being fastened to the panel (2) via the at least two fastening means (4) so as to attenuate vibrations of the panel (2), the towing device (3) comprising a ring (31) and a rod (32), **characterized in that** a first fastening means (4) is arranged through a central opening in the ring (31) of the towing device (3), and **in that** a second fastening means (4) cooperates with the rod (32) of the towing device (3).

2. Assembly (1) according to the preceding claim, **characterized in that** the surface of the panel (2) has, in the vicinity of the fastening means (4), a counter-form (21) of the towing device (3).

3. Assembly (1) according to Claim 1 or 2, **characterized in that** the rod (32) of the towing device (3) comprises a through-hole (321), and **in that** a second fastening means (4) is arranged through the hole (321).

4. Assembly (1) according to one of the preceding claims, **characterized in that** at least one fastening means (4) comprises a conical head (41) bearing on the towing device and a threaded part (42) cooperating with a tapping (43) arranged in the panel (2).

5. Assembly (1) according to one of the preceding claims, **characterized in that** at least one fastening means (4) is a housing (44) produced in the panel (2).

6. Assembly (1) according to one of the preceding claims, **characterized in that** it comprises a trim (5) covering the panel (2), and **in that** the trim (5) comprises a hatch (51) for accessing the towing device (3).

7. Assembly (1) according to one of the preceding claims, **characterized in that** the panel (2) is made of thermoplastic material or sheet metal.

8. Motor vehicle tailgate (11) comprising an assembly (1) according to one of the preceding claims.

9. Motor vehicle (10) comprising a tailgate (11) according to Claim 8 and/or an assembly (1) according to one of Claims 1 to 7.
